# EUROPEAN PATENT APPLICATION

(11) **EP 3 093 132 A1**
(43) Date of publication of application: **16.11.2016**
(21) Application number: 14881405.6
(22) Date of filing: 05.12.2014
(51) Int. Cl.: B29C 73/02, B29C 73/24, B60S 5/04

(54) **PUNCTURE REPAIR KIT**

(30) Priority: 06.02.2014 JP 2014021581; 06.02.2014 JP 2014021582; 07.02.2014 JP 2014022582; 02.07.2014 JP 2014137095
(71) Applicant: Sumitomo Rubber Industries, Ltd., Kobe-shi, Hyogo 651-0072 (JP)
(72) Inventor: KAWATANI Akihiko, Kobe-shi Hyogo 651-0072 (JP); KONO Tsutomu, Kobe-shi Hyogo 651-0072 (JP); OKUBO Nariya, Kobe-shi Hyogo 651-0072 (JP)
(74) Representative: Manitz, Finsterwald & Partner GbR
(86) International application number: PCT/JP2014/082311
(87) International publication number: WO 2015/118763

(57) **Abstract**

The purpose of the present invention is to prevent an extraction cap from getting detached under high-temperature environments while minimizing the force for attaching the extraction cap under low-temperature environments. A connecting means (7) for connecting a compressor (3) and an extraction cap (5) is composed of first and second connecting portions (7A, 7B). The first connecting portion (7A) has a hook pawl portions (28) at the tip end part of each of a pair of plate-shaped base portions (27) extending in a coupling direction from the extraction cap (5) through on both sides of an intake port portion (10), the hook pawl portions (28) having a triangular cross-sectional shape and including a locking surface (28S) projecting outwardly. The second connecting portion (7B) has an engaging surface (29S) that engages with the locking surfaces (28S). The angle θ1 of the locking surfaces (28S) is different from the angle θ2 of the engaging surfaces (29S); or a plate-shaped portion (40) which is a region from the rear end in the coupling direction, of the plate-shaped base portion (27) to the hook pawl portion (28), has a constant width portion (40A) and a constricted portion (40B) .

## Description

### Technical field

The present invention relates to a puncture repair kit for fixing a puncture of a tire by sequentially injecting a puncture repair liquid and compressed air to the punctured tire.

### Background technique

For example, in the following Patent Document 1, as shown in Figure 14 (A), there is disclosed a puncture repair kit using a compressor (a) which has a compressed air discharge port portion a1, and a bottle unit (d) in which an extraction cap (c) is fitted with a bottle container (b).

The extraction cap (c) has
an intake port portion b1 for getting the compressed air coming from the compressed air discharge port portion a1 through a first flow path f1 in the bottle container (b), and
an outlet portion b2 for taking out a repair liquid and the compressed air in succession from the bottle container (b) through a second flow path f2 as a result of the getting-in of the compressed air.

On the other hand, the intake port portion b1 is formed by a convex connection nozzle, and configured as being directly connectable in the up-and-down direction to the compressed air discharge port portion a1 which is concave.
Further, the puncture repair kit is provided with a connecting means (g) for fixing the compressor (a) and the extraction cap (c) in the state of the direct coupling.

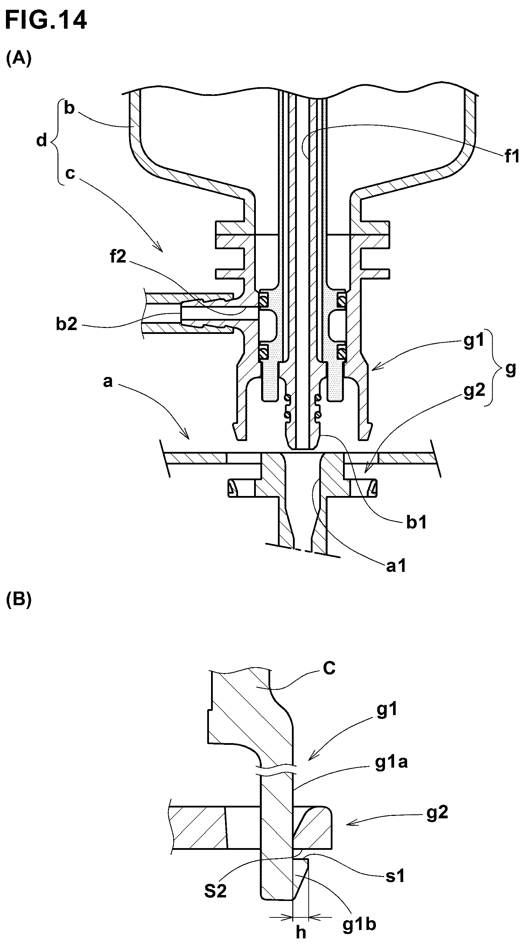

The connecting means (g) is composed of a first connecting portion g1 formed on the extraction cap side, and a second connecting portion g2 formed on the compressor side. As shown enlargedly in Figure 14 (B), the first connecting portion g1 is provided at a distal end portion of a plate-shaped base portion g1a extending downward from the extraction cap (c) with a triangular hook claw part g1b with a locking surface s1 so as to face outward.
The second connecting portion g2 has an engaging surface s2 for locking the locking surface s1 by its surface contact.

Here, the connecting means (g) is required to have contradictory performances: the extraction cap (c) does not come off from the compressor (a) even if the extraction cap (c) is softened under high temperature environments (for example, 60 degrees C); and the first connecting portion g1 does not become hard to fit into the second connecting portion g2 even if the extraction cap (c) is hardened under low-temperature environments (for example, -40 degrees C).

Therefore, by setting the thickness and width optimally for the plate-shaped base portion g1a, it is attempted to achieve both of the required performances under high temperature environments and low temperature environments.
However, conventionally, the plate-shaped base portion g1a is formed at a constant width over its entire length.
Therefore, the degree of design freedom is small, which makes it difficult to balance at high levels.

On the other hand, by setting the protruding height (h) optimally for the hook claw part g1b, it is attempted to achieve both of the required performances under high-temperature environments and low-temperature environments.
However, it is difficult to achieve both of the required performances at high levels by only adjusting the protruding height (h) of the hook claw part g1b.

### Prior art document

### Patent document

Patent Document 1: Japanese unexamined Patent Publication No. 2013-67013

### Summary of the invention

It is therefore, an object of the present invention to provide a puncture repair kit, in which the coming-off of the extraction cap under high temperature environments can be suppressed, while keeping a low attaching force of the extraction cap under low-temperature environments.

### Means for solving the Problems

The present invention is a puncture repair kit comprising
a compressor having a compressed air discharge port portion for discharging compressed air,
a bottle unit in which an extraction cap is attached to a mouth of a bottle container containing a puncture repair liquid, and
a connecting means capable of connecting and fixing the compressor and the extraction cap of the bottle unit each to other,
characterized in that
the extraction cap has
an intake port portion capable of being directly coupled with the compressed air discharge port portion in a coupling direction and taking the compressed air from the compressed air discharge port portion into the bottle container through a first flow path, and
an outlet portion for taking out the puncture repair liquid and the compressed air in succession from the bottle container through a second flow path by the intake of the compressed air,
the connecting means is composed of
a first connecting portion formed on the extraction cap side and a second connecting portion formed on the compressor side,
the first connecting portion has
a pair of plate-shaped base portions extending in the coupling direction from the extraction cap through on both sides of the intake port portion, and
a hook claw portion of a triangular cross section provided at a tip end portion of each of the plate-shaped base portions and comprising a locking surface projecting outwardly from the outer surface of the plate-shaped base portion,
the second connecting portion has
an engaging surface for fixing the compressor and the extraction cap in the state of the direct coupling by engaging with the locking surface, and
(1) in a cross section perpendicular to the plate-shaped base portion, an angle θ1 of the locking surface with respect to a reference line oriented in the front in the coupling direction, is different from an angle θ2 of the engaging surface with respect to the reference line, or
(2) a plate-shaped portion which is a region from the rear end in the coupling direction, of the plate-shaped base portion to the hook claw portion has
   a constant width portion whose width is constant, and
   a constricted portion whose width is less than that of the constant width portion.

### Effects of the invention

As described above, in the connecting means, the locking surface can line contact with the engaging surface by providing a difference between the angle θ1 of the locking surface and the angle θ2 of the engaging surface.
By the line contact, the contact pressure between the locking surface and the engaging surface becomes larger than that in the conventional surface contact, and the hook claw part becomes hard to disengage from the engaging surface.

Further, when the plate-shaped portion of the plate-shaped base portion is provided with the constricted portion having a reduced width, the rigidity of the plate-shaped base portion can be more finely adjusted by the constricted portion in addition to the thickness and width of the plate-shaped base portion.

As a result, in either case, it is possible to suppress the coming-off of the extraction cap under high temperature environments, while kept a low attaching force of the extraction cap under low temperature environments, therefore,
it is possible to achieve performance requirements under high temperature environments and low temperature environments at high levels.

### Brief description of the drawings

[Figure 1] a perspective view showing a coupled state of a puncture repair kit of the present invention.
[Figure 2] a perspective view showing the compressor before coupled.
[Figure 3] a partial cross-sectional view showing the bottle unit before coupled.
[Figure 4] a perspective view showing the extraction cap.
[Figure 5 ] (A), (B) are partial cross-sectional views showing a second closing means before coupled and after coupled.
[Figure 6] (A), (B) are partial cross-sectional views showing a first closing means before coupled and after coupled.
[Figure 7] a cross-sectional view showing a connecting means before coupled.

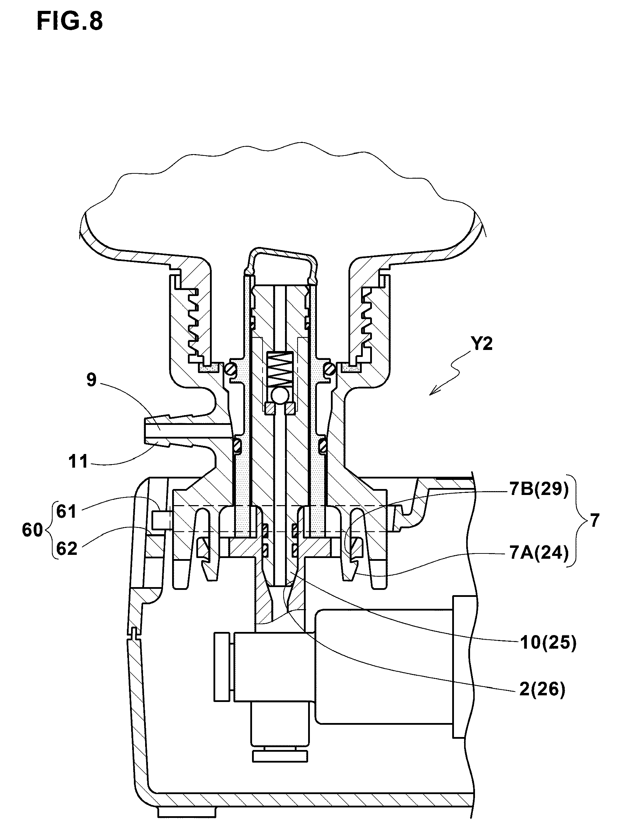

[Figure 8] a cross-sectional view showing a puncture repair kit in the coupled state.
[Figure 9] an enlarged cross-sectional view showing the connecting means.
[Figure 10] (A), (B) are a front view and a side view showing a second embodiment of the first connecting portion.
[Figure 11] (A) - (C) are front views showing other examples of the constricted portion.
[Figure 12] a partial plan view of the seating recess for the compressor viewed from above the compressor.
[Figure 13] a side view of the indicating means.
[Figure 14] (A) is a cross-sectional view showing a conventional puncture repair kit, (B) is an enlarged cross-sectional view showing the connecting means thereof.

### Modes for carrying out the Invention

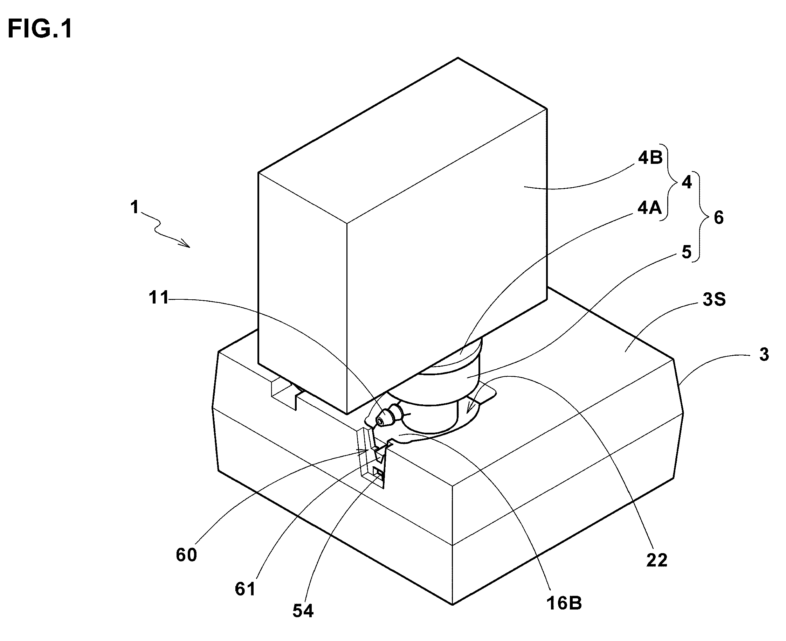

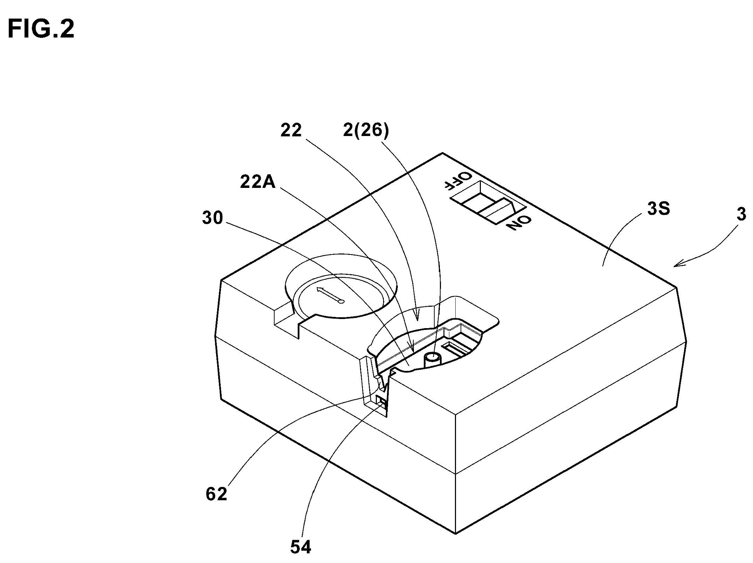

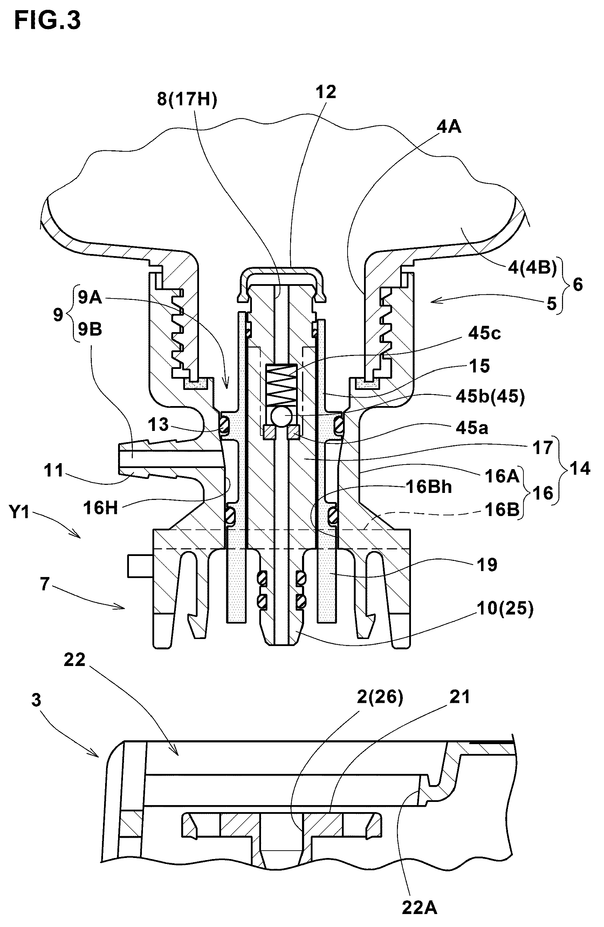

Hereinafter, embodiments of the present invention will be described in detail.
As shown in Figures 1 and 2, a puncture repair kit 1 in this example has a compressor 3, a bottle unit 6 in which a bottle container 4 fitted with an extraction cap 5, and a connecting means 7 (shown in Figure 3) capable of connecting and fixing the extraction cap 5 and the compressor 3 each other.

The compressor 3 has a movable portion of a known structure employing a motor, a piston, a cylinder and the like disposed within a housing case of a flat rectangular box shape for example.
The compressor 3 in this example has, in its upper surface 3S, a seating recess 22 in which the extraction cap 5 is seated. And in the seating recess 22, there is disposed a compressed air discharge port portion 2 for discharging compressed air so as to orient upward.

The bottle unit 6 has a bottle container 4, and the extraction cap 5 attached to the mouth portion 4A thereof. The bottle container 4 has a container portion 4B for accommodating the puncture repair liquid, and
the small-diameter cylindrical mouth portion 4A projecting from the lower end thereof.

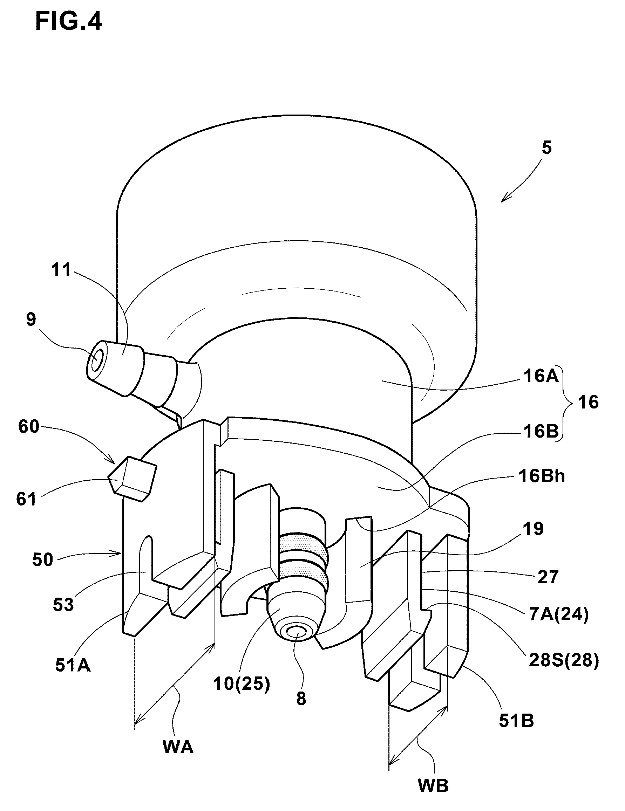

As shown in Figures 3 and 4, the extraction cap 5 has an intake port portion 10 for taking
the compressed air coming from the compressed air discharge port portion 2
in the bottle container 4, through a first flow path 8, and an outlet portion 11 for taking out
the puncture repair liquid and the air in succession from the bottle container 4 through a second flow path 9 by the taking-in of the compressed air.
The extraction cap 5 in this example has
first and second closing means 12 and 13 for closing the first and second flow paths 8 and 9 in a state Y1 before the coupling is established by the connecting means 7.

Specifically, the extraction cap 5 in this example is configured to include a cap main body 14 and a sheath pipe 15. The cap main body 14 has a body portion 16 and an air feed tube portion 17.
The body portion 16 is composed of
a tubular portion 16A provided at the top end thereof with a bottle attaching portion to which the mouth portion 4A of the bottle container 4 is attached, and
a bottom plate portion 16B closing the lower end of the tubular portion 16A.
The inner bore 16H of the tubular portion 16A is in communication with the inside of the bottle container 4.
In this example, the mouth portion 4A and the inner bore 16H of the tubular portion 16A are screwed.

The air feed tube portion 17 rises from the bottom plate portion 16B concentrically with the tubular portion 16A.
The center bore 17H of the air feed tube portion 17 constitutes the first flow path 8.
In this example, the upper end of the air feed tube portion 17 is positioned below the liquid level of the puncture repair liquid.
Further, in the first flow path 8, there is disposed an one-way valve 45 to prevent the backflow of the puncture repair liquid from the bottle container 4. The one-way valve 45 comprises a valve seat portion 45a formed in the first flow path 8, a ball valve 45b for opening and closing the valve seat portion 45a, and
a spring 45c which presses the ball valve 45b to the valve seat portion 45a.

The body portion 16 has the intake port portion 10 communicating with the first flow path 8.
The intake port portion 10 is directly coupled with the compressed air discharge port portion 2 of the compressor 3 without using a hose or the like.
Specifically, one of the compressed air discharge port portion 2 and the intake port portion 10 is formed as a connection nozzle 25 which projects toward the other.
And the other is formed as a nozzle socket 26 into which the connection nozzle 25 fits along the coupling direction (the vertical direction in this example).
In this example, the intake port portion 10 is formed as the connection nozzle 25 protruding downward from the bottom plate portion 16B, and the compressed air discharge port portion 2 is formed as the nozzle socket 26.

The sheath pipe 15 fits around the air feed tube portion 17 slidably in the vertical direction.
At the lower end of the sheath pipe 15, there is provided with a push-up lever 19 for pushing the sheath pipe 15 upward accompanying the direct coupling.
The push-up lever 19 is composed of two or three (two in this example) protruding pieces which protrude from the lower end of the sheath pipe 15 and penetrate through the bottom plate portion 16B to extend downward.
The bottom plate portion 16B is provided with through holes 16Bh to allow the push-up lever 19 penetrates therethrough.
By the direct coupling, the push-up lever 19 contacts with a contact surface 21 of the compressor 3, and pushes the sheath pipe 15 upward.
The push-up lever 19 in this example is curved in an arc shape concentric with the body portion 16.

The sheath pipe 15 is provided with the second closing means 13 for closing the second flow path 9 so as to be able to move integrally with the sheath pipe 15.
At the upper end 17E of the air feed tube portion 17, there is provided with the first closing means 12 for closing the first flow path 8.
The first and second closing means 12 and 13 open the first and second flow paths 8 and 9 by being actuated by the pushing up of the sheath pipe 15.

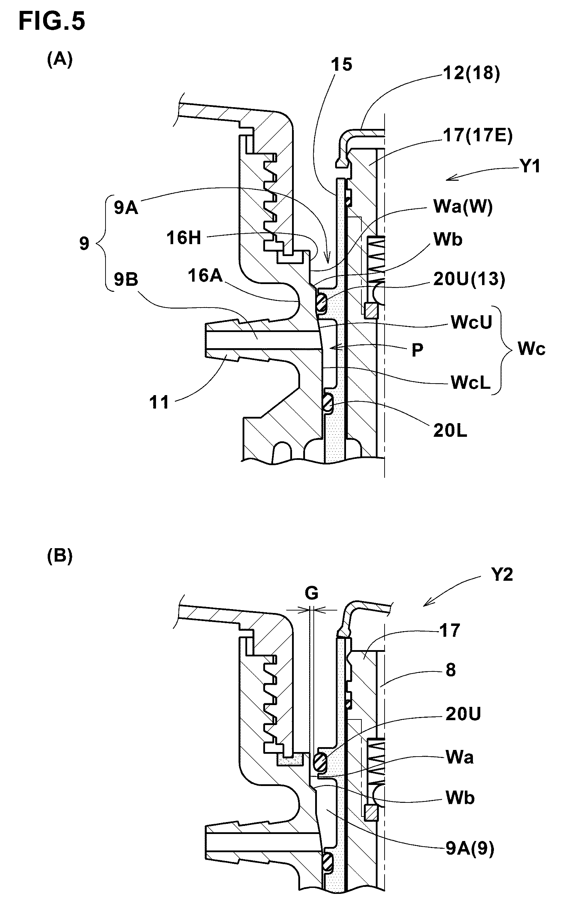

As shown in Figure 5 (A) enlargedly, the second flow path 9 has
an annular vertical flow path portion 9A which is formed by a gap between the sheath pipe 15 and the tubular portion 16A, and
a lateral flow path portion 9B connected to the vertical flow path portion 9A at an intersection point P and extending from the intersection point P to the opening of the outlet portion 11 at the tip end.
The outlet portion 11 protrudes radially outwardly from the tubular portion 16A as being a connecting portion for the hose for injecting the puncture repair liquid and compressed air to the tire side,

The inner wall surface W of the tubular portion 16A has a large-diameter wall portion Wa where the inner bore 16H has a larger diameter, and
a small-diameter wall portion Wc continuing downwards to the large diameter wall portion Wa through a step portion wb.
The step portion wb is formed in a position above the intersection point P. Therefore, the small-diameter wall portion Wc is further divided into
an upper small-diameter wall portion WcU between the step portion wb and the intersection P, and
a small-diameter wall portion WcL on the lower side of the intersection point P.

The second closing means 13 in this example is formed by upper and lower ring-shaped sealing members 20U and 20L which are provided on the sheath pipe 15 so as to be integrally movable therewith.
The sealing member 20U, 20L is a so-called O-ring, and is held by a circumferential groove formed on the outer circumference of the sheath pipe 15.
In the second closing means 13 in the state Y1 before coupled (shown in Figure 5 (A)), the upper sealing member 20U comes into contact with the upper small-diameter wall portion WcU, and closes the second flow path 9.
As a result, the puncture repair liquid is prevented from flowing out toward the outlet portion 11.
In the state Y2 being coupled (shown in Figure 5 (B)), as the sheath pipe 15 is pushed up by the push-up lever 19, the sealing member 20U is moved upward beyond the step portion wb.
At this time, a gap G is formed between the sealing member 20U and the large diameter wall portion Wa. As a result, the second flow path 9 is opened.

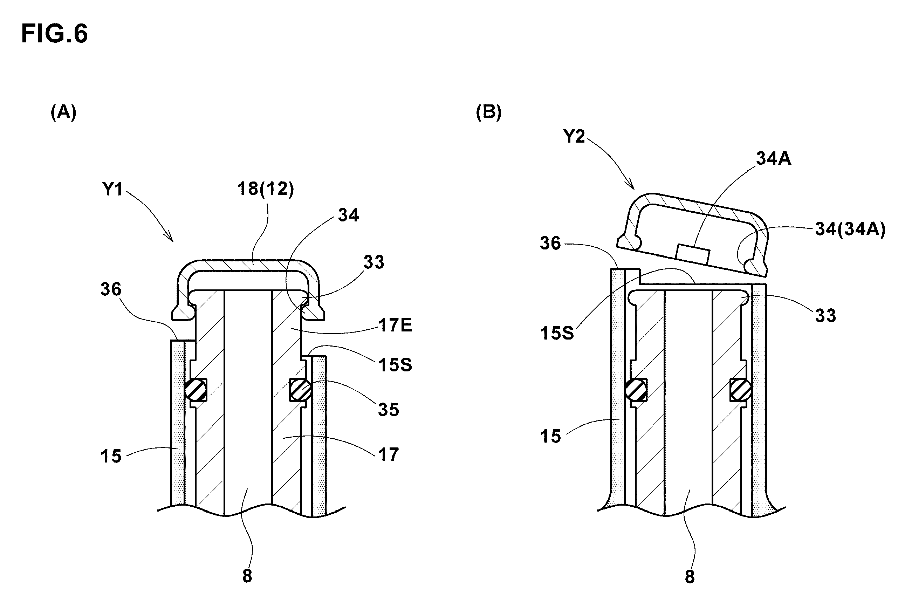

As shown in Figures 6 (A), (B), the first closing means 12 is an inner lid 18 which is fitted to the upper end portion 17E of the air feed tube portion 17.
The inner lid 18 is pushed up by the sheath pipe 15 and detached from the air feed tube portion 17 to open the first flow passage 8.
The upper end portion 17E of the air feed tube portion 17 is provided with a first locking projecting portion 33 which projects at a small height from the outer circumferential surface of the air feed tube portion 17.
Also the inner lid 18 is provided with a second locking projecting portion 34 which projects at a small height from the inner circumferential surface of the inner lid 18 and is engaged with the first locking projecting portion 33.

The first locking projecting portion 33 is formed as an annular protrusion extending continuously in the circumferential direction.
The second locking projecting portion 34 is made up of a plurality of locking projections 34A which are arranged at intervals in the circumferential direction.
The number of the locking projections 34A is an even number (e.g. 2, 4, etc.), and the paired locking protrusions 34A are arranged on respective diameter lines so as to face each other.
The width in the circumferential direction of each of the locking projections 34A is preferably 5 to 45 degrees if expressed in terms of the central angle around the center point of the inner lid 18.

In the state Y1 before coupled, the second locking projecting portion 34 engages the first locking projecting portion 33 on the under side thereof.
By the pushing-up by the sheath pipe 15, the Inner lid 18 is elastically deformed and the second locking projecting portion 34 gets over the first locking projecting portion 33. Thereby, the inner lid 18 is disengaged.

A seal ring 35 sealing between the air feed tube portion 17 and the sheath pipe 15 such as an O-ring is attached to the air feed tube portion 17.
Further, in the upper end surface 15S of the sheath pipe 15 in this example, a push-up projection 36 for pushing up the inner lid 18 is formed so as to project in the form of a step.
The push-up projection 36 is preferably formed in the upper surface 15S over an angular range of not more than 90 degrees as the center angle around the central point of the sheath pipe 15. This formation of the push-up projection 36 causes an effect close to a bottle opener for example, and it is possible to easily remove the inner lid 18 by a smaller pushing-up force, while suppressing the dropping off of the inner lid 18 at the time of storage.

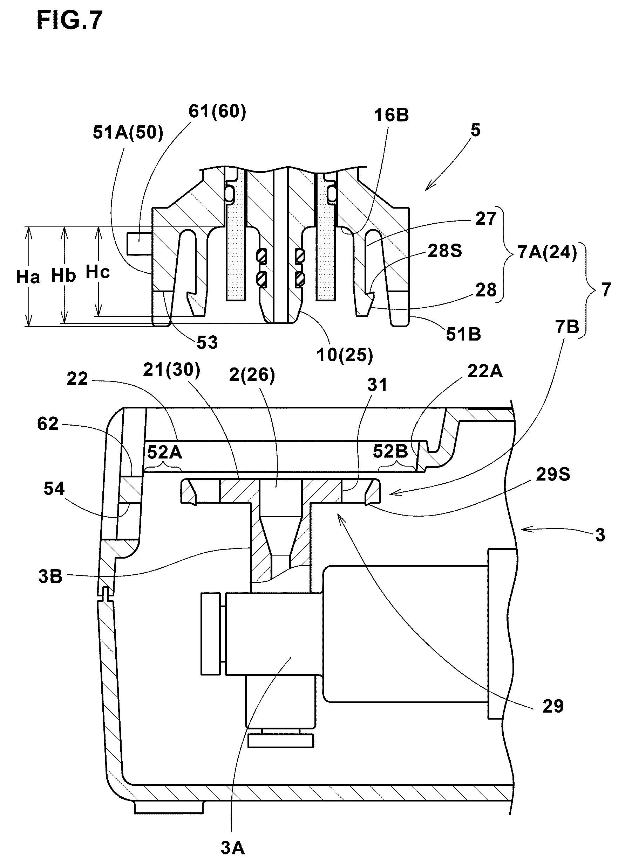

As shown in Figure 7, the connecting means 7 is composed of a first connecting portion 7A formed on the side of the extraction cap 5, and a second connecting portion 7B formed on the side of the compressor 3.

The first connecting portion 7A is formed by a pair of hook pieces 24 having a pair of plate-shaped base portions 27 extending from the extraction cap 5 in the coupling direction, and
a hook claw part 28 provided at the tip end portion of each of the plate-shaped base portions 27.
In this example, a pair of the plate-shaped base portions 27 extend downward from the bottom plate portion 16B of the extraction cap 5 passing through on both sides of the intake port portion 10 (connection nozzle 25).
The hook claw part 28 has a triangular cross section and has a top surface which is a locking surface 28S projecting outwardly from the outer surface of the plate-shaped base portion 27.

The second connecting portion 7B has an engaging portion 29 having an engaging surface 29S which engages with the locking surface 28S.
By the engagement, the compressor 3 and the extraction cap 5 are fixed in the state of the direct coupling.
In this example, a frame plate 30 formed integrally with the nozzle socket 26 is provided with the engaging portion 29.
The frame plate 30 is formed integrally with the upper end portion of a joint tube portion 3B for forming the nozzle socket extending from the cylinder 3A of the compressor 3.
The frame plate 30 is disposed on the lower side of the seating recess 22.
The upper surface of the frame plate 30 which forms the contacting surface 21 is exposed through a cutout opening 22A provided in the bottom of the seating recess 22.

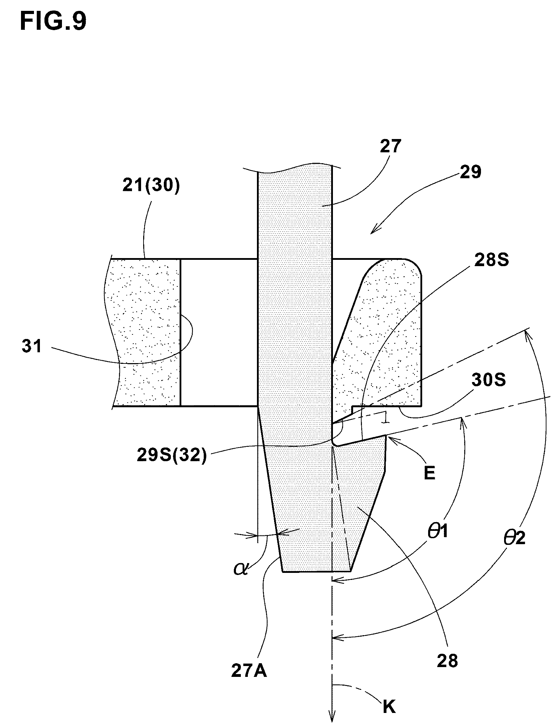

As shown in Figure 9 enlargedly, the engaging portion 29 includes a claw inserting hole 31 through which the hook claw part 28 can pass.
The engaging surface 29S is formed in the lower surface of the frame plate 30 to continue from the claw inserting hole 31. According to a first embodiment, in a cross section perpendicular to the plate-shaped base portion 27, the angle θ1 of the locking surface 28S with respect to a reference line K oriented forward in the coupling direction is differed from the angle θ2 of the engaging surface 29S with respect to the reference line K. Therefore, the locking surface 28S can line-contact with the engaging surface 29S. It is preferable that the angle θ1 is smaller than the angle θ2, and the angle θ1 is in a range of 90 to 150 degrees.

In the connecting means 7 configured as described above, since the locking surface 28S and the engaging surface 29S can line contact with each other, the contact pressure between the locking surface 28S and the engaging surface 29S is increased in comparison with the conventional surface contact. As a result, it is possible to make the hook claw part 28 hardly come off the engaging surface 29S.
In order to prevent the tip end E of the locking surface 28S from contacting with the lower surface 30S of the frame plate 30 (substantially perpendicular to the reference line K), a protrusion 32 is provided on the lower surface 30S, and the engaging surface 29S is formed in the lower surface of the protrusion 32.

If the above-mentioned angle θ1 is more than 150 degrees, the angle θ2 has to be further increased. In this case, the tip end of the protrusion 32 becomes too acute and reduced in the strength, therefore, there is a possibility that it is damaged by impact or vibration.
If the angle θ1 is too large, then under high-temperature environments, the tendency of the extraction cap 5 to cause a thermal expansion in a direction in which the angle θ1 is reduced, becomes stronger. Therefore, when the angle θ1 exceeds 150 degrees, it is disadvantageous in that a surface-contact with the engaging surface 29S tends to occur under high-temperature environments and the contact pressure is reduced. Further, since an upward force acts on the extraction cap 5 when the compressed air is supplied, if the angle θ1 is less than 90 degrees, the hook claw part 28 becomes dynamically easily disengaged.

Taking into consideration the dimensional tolerance, the difference of (θ2-θ1) of the angles θ1 and θ2 is preferably not less than 5 degrees in order to ensure a line contact.

The plate-shaped base portion 27 in this example is provided
in a tip region including a region in which at least the hook claw part 28 is formed,
with an inclined portion 27A in which the plate-shaped base portion 27 is inclined toward the hook claw part 28.
Thus, the hook claw part 28 becomes hardly deformed, and it is possible to further suppress the disengaging of the plate-shaped base portion 27.
The angle α of the inclined portion 27A with respect to the reference line K is preferably not more than 5 degrees.
If the angle α exceeds 5 degrees, it invites the tendency of the attaching force of the extraction cap 5 to increase under low-temperature environments.

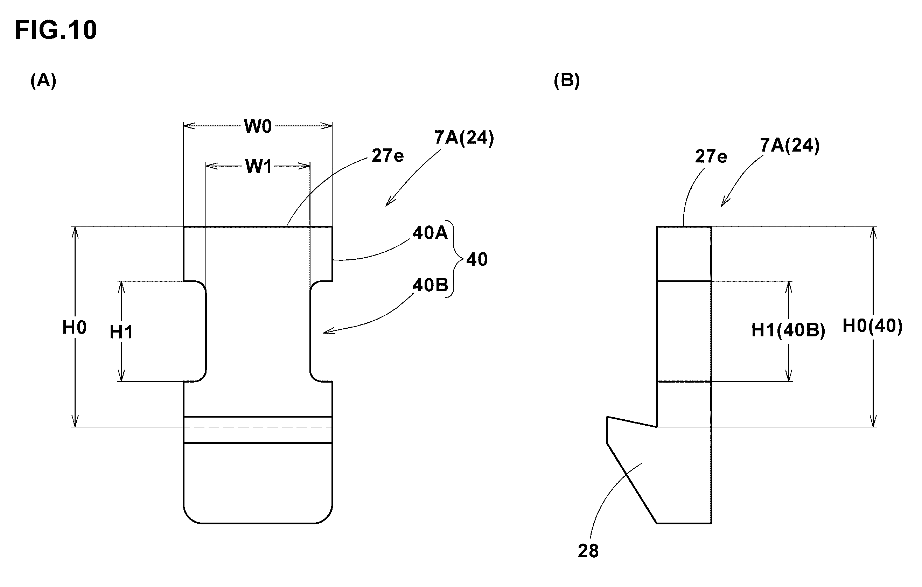

In Figure 10 (A), (B), a second embodiment of the hook piece 24 (first connecting portions 7A) is shown.
In the second embodiment, a plate-shaped portion 40 of the plate-shaped base portion 27 is formed by
a constant width portion 40A whose width is constant, and
a constricted portion 40B whose width is reduced to less than the constant width portion 40A.
The plate-shaped portion 40 is defined by a region from the rear end 27e in the coupling direction, of the plate-shaped base portion 27 to the hook claw part 28.

In this plate-shaped portion 40, it is preferable that the minimum width w1 of the constricted portion 40B is not less than 0.4 times the width w0 of the constant width portion 40A. Also it is preferable that the length H1 of the constricted portion 40B is not less than 0.2 times the length H0 of the plate-shaped portion 40.

Since the hook piece 24 of such second embodiment has the constricted portion 40B, it is possible to fine tune the stiffness of the plate-shaped base portion 27 by the thickness and the width as well as the constricted portion 40B.
As a result, performance requirements under high temperature environments and low temperature environments can be achieved at high levels, while increasing the degree of design freedom.

If the minimum width w1 of the constricted portion 40B is less than 0.4 times the width w0 of the constant width portion 40A, the constricted portion 40B becomes easily bent, and disconnection is liable to occur under high-temperature environments. Further, there is a tendency that the stress is concentrated in the constricted portion 40B excessively and damages such as breakage occur.
If the length H1 of the constricted portion 40B is less than 0.2 times the length H0 of the plate-shaped portion 40, there is a tendency that the stress is excessively concentrated in the constricted portion 40B, and disconnection and damages such as breakage occur.
From this viewpoint, the lower limit for the minimum width w1 is preferably not less than 0.5 times the width w0, and the upper limit is preferably not more than 09 times.
Also the lower limit for the length H1 is preferably not less than 0.3 times, and
the upper limit is preferably not more than 0.9.

It is preferable that the minimum width w1 of the constricted portion is in a range of 8 to 20 mm, and the length of the plate-shaped portion H0 is in a range of 8 to 15 mm.

In the second embodiment, the angles θ1 and θ2 of the locking surface 28S and the engaging surface 29S may be the same or the angles θ1 and θ2 may be different form each other similarly to the first embodiment.

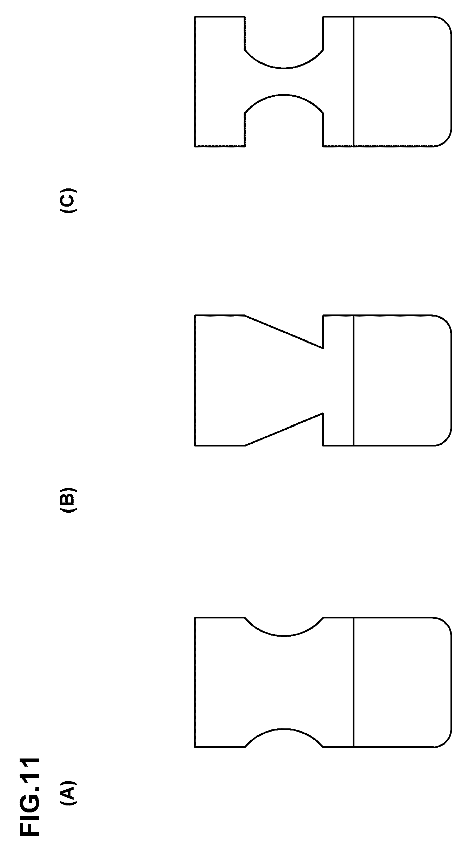

In Figure 11 (A)-(C), there are shown other embodiments of the constricted portion 40B.
As shown, the constricted portion 40B can be formed in various shapes, e.g. arc shape, v shape, U shape and the like in addition to forming in a constant width

Next, the puncture repair kit 1 in this example is provided with a guide means 50 for limiting the attaching direction of the extraction cap 5 at the time of coupling directly as shown in Figures 4 and 7.
The guide means 50 is composed of first and second guide plate portions 51A and 51B disposed on the extraction cap 5 side, and first and second guide sockets 52A and 52B disposed on the compressor 3 side.

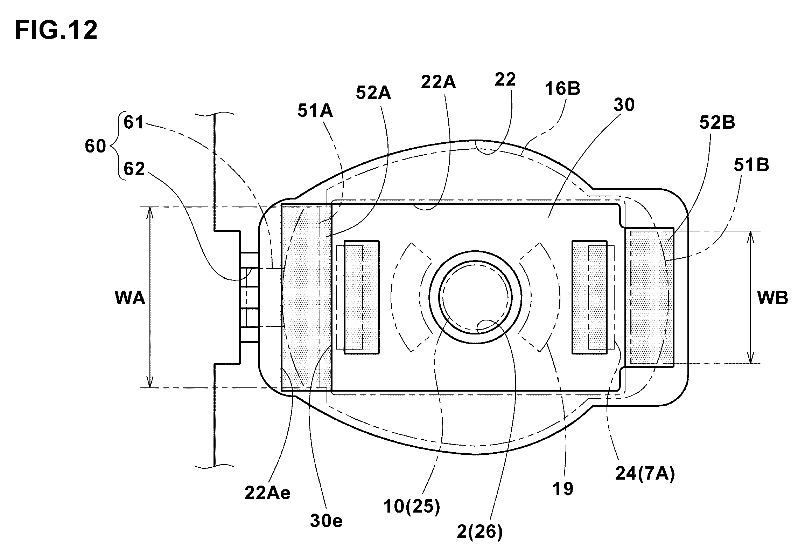

The first and second guide plate portions 51A and 51B extend in the coupling direction from the extraction cap 5 through on both outer sides of the intake port portion 10 (connection nozzle 25).
The first and second guide plate portions 51A and 51B in this example are disposed on the further outer side of the hook piece 24, and are formed substantially in parallel with the hook piece 24.
The first and second guide plate portion 51A and 51B are respectively inserted in the first and second guide sockets 52A and 52B.
As shown in Figure 12, the first and second guide sockets 52A and 52B are formed as regions surrounded by the side edge 22Ae of the cutout opening 22A provided in the seating recess 22 and the side edge 30e of the frame plate 30.
However, they can be formed in the bottom of the seating recess 22, or in the frame plate 30.

The first and second guide plate portions 51A and 51B are different from each other in the forming positions and/or the shapes. The first and second guide sockets 52A and 52B have the forming positions and/or the opening shapes suited to the first and second guide plate portions 51A and 51B. Thereby, the erroneous insertion can be prevented. As a result, it is possible to prevent breakage of the connection nozzles 25 and hook pieces 24 caused by erroneous insertion.

In this example, the width WA of the first guide plate 51A is different from the width WB of the second guide plate 51B. In this case, in order to prevent erroneous insertion, the difference between the width WA and the width wb is preferably not less than 3 mm, taking the dimensional change due to thermal expansion into consideration.

As shown in Figure 7, the protruding length Ha from the extraction cap 5, of the first and second guide plate portions 51A and 51B is preferably more than
the protruding length Hb from the extraction cap 5, of the connection nozzle 25, and more than the protruding length Hc from the extraction cap 5, of the hook piece 24.
Thereby, the connection nozzle 25 and the hook piece 24 can be protected, and the damage of the connection nozzle 25 and the hook piece 24 when the bottle unit 6 is accidentally dropped can be prevented. In this case, preferably, the difference (Ha-Hmax) of the projecting length Ha from the projecting length Hmax which is the larger one of the protruding lengths Hb and Hc is set to be 2 to 20 mm.
If the difference (Ha-Hmax) is smaller than 2 mm, the protective effect may not be sufficiently exhibited. Even if exceeds 20 mm, the protective effect can not be expected, rather it has a disadvantage such that the extraction cap 5 grows in size.

In order to remove the bottle unit 6 from the compressor 3 after the puncture repair, it is necessary for the puncture repair kit 1 that the coupling by the connecting means 7 is released by pressing the hook claw part 28 inward (toward the connection nozzle 25) by using a release bar such as a screwdriver.
For that purpose, the first and second guide plate portions 51A and 51B in this example are provided at the tip end with an insertion hole 53 which is for example U-shaped, and through which the release bar can pass.
Similarly, in the side wall of the compressor 3, an insertion hole 54 through which the release bar can pass is formed.

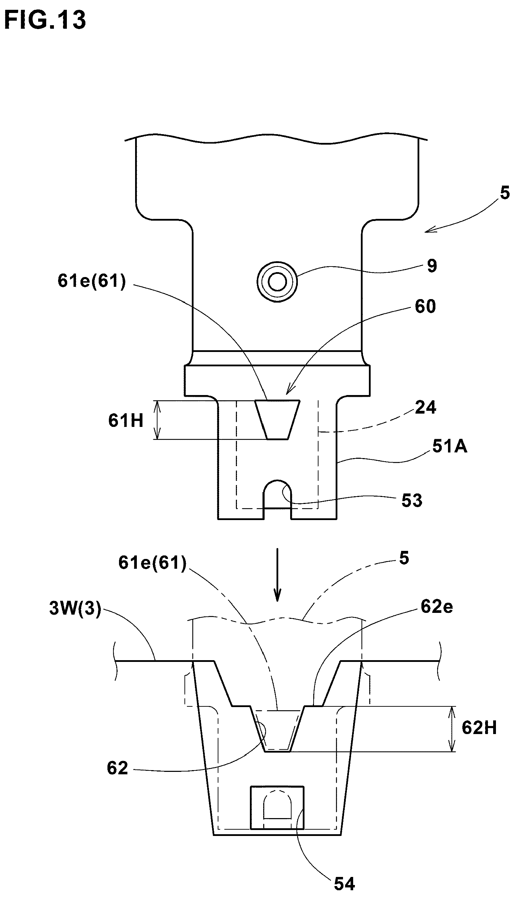

Next, as shown in Figures 4 and 13, the puncture repair kit 1 has an indicating means 60 indicating that the coupling by the connecting means 7 has been completed.

The indicating means 60 comprises a projecting indicator portion 61 which projects from the outer surface of the extraction cap 5.
Specifically, the indicating means 60 has the projecting indicator portion 61, and a notched recess 62 formed on the outer surface of the compressor 3.
The projecting indicator portion 61 is oriented in the coupling direction (in this example downward) at the direct coupling and inserted in the notched recess 62.
Therefore, by the completion of the insertion of the projecting indicator portion 61 into the notched recess 62, the user can visually know the completion of the coupling by the connecting means 7.

In this example, the projecting indicator portion 61 protrudes from the outer surface of the first guide plate 51A toward the same direction as the outlet portion 11.
Further, the notched recess 62 is formed on the outer wall 3w of the compressor 3 so as to extend in the coupling direction downwardly from the upper end side.
It is preferable that the outer shape of the projecting indicator portion 61 as viewed from the outer side is a triangular or trapezoidal shape whose width is decreased forward in the coupling direction (downward in this embodiment), therefore, smooth insertion is possible.
Incidentally, the notched recess 62 is also formed in a triangular shape or a trapezoidal shape having the same shape which fits to the projecting indicator portion 61.

Particularly in this embodiment, the depth 62H of the notched portion 62 is slightly large than the height 61H of the projecting indicator portion 61.
And, the completion of the insertion, i.e. the completion of the coupling is indicated when the projecting indicator portion 61 is inserted to a certain insertion depth such that the rear edge 61e in the coupling direction (upper edge 61e in this example), of the projecting indicator portion 61 goes beyond, in the coupling direction, the rear edge 62e in the coupling direction (upper edge 62e in this example), of the notch recess 62.
In order to clearly indicate the insertion depth, it is preferred that the above-mentioned insertion depth rear edges 61e and 62e are straight lines.
From this point too, it is preferred that the projecting indicator portion 61 is a triangular or trapezoidal shape.

In order to make the completion of the insertion more visually recognizable, the color of the projecting indicator portion 61 is preferably a different color from the peripheral part of the notched recess 62 and more preferably the complementary color.

while detailed description has been made of especially preferable embodiments of the present invention, the present invention can be embodied in various forms without being limited to the illustrated embodiment

### working Examples

### (A) First embodiment:

Puncture repair kits having the structure shown in Figures 1 to 3 were experimental manufactured based on the specifications shown in Table 1. Each sample was tested for the attaching of the extraction cap under a low-temperature environment, and the coming-off of the extraction cap under a high-temperature environment.

The puncture repair kits were differed only in the angles θ1 and θ2 of the locking surface and the engaging surface on the connecting means and the angle α of the inclined portion of the plate-shaped base portion.

The hook piece was not provided with the constricted portion. The specifications were substantially the same excepting those listed in Table 1.

### (1) The attaching of the extraction cap under the low-temperature environment:

The compressor and the bottle unit were left in a constant temperature bath for 24 hours under a low temperature environment (-40 degrees C).

Then, the inserting force (unit N) at the time of attaching the bottle unit to the compressor was measured by the use of a measuring instruments (DIGITAL FORCE GAUGE / Imada Co., Ltd.: Model DPS-50).

The smaller the inserting force, the better the attaching.

### (2) The coming-off of the extraction cap under a high-temperature environment:

The compressor and the bottle unit were left in the constant temperature bath for 24 hours under a high temperature environment (60 degrees C). Then, in the constant temperature bath, a pressurizing test was carried out continuously for one hour by connecting the bottle unit to the compressor and activating the compressor. And, in the pressurizing test, the occurrence of coming-off of the extraction cap from the compressor (disengaging of the hook claw part) was checked.
- thing in which coming-off did not occur after measured three times --- O
- thing in which coming-off occured at least once after measured three times --- Δ
- thing in which coming-off occured at least twice after measured three times --- x

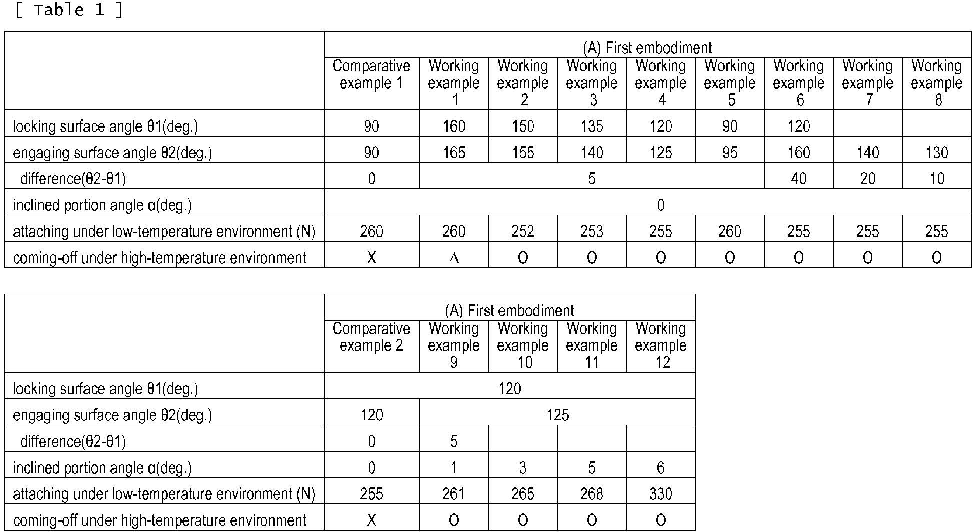

As shown in Table 1, it can be confirmed that, in the working Examples, the coming-off of the extraction cap under high-temperature environments can be suppressed while keeping a low attaching force of the extraction cap under the low-temperature environments.

### (B) Second Embodiment:

Puncture repair kits having the connecting means whose specifications are shown in Table 2 were experimentally manufactured and tested for the attaching of the extraction cap under a low-temperature environment, and the coming-off of the extraction cap under a high-temperature environment.

The specifications were substantially the same excepting those listed in Table 2.

In each of the hook pieces, the angles θ1 and θ2 were equal to each other, and the angle α of the inclined portion was 0 degree. Test methods were the same.

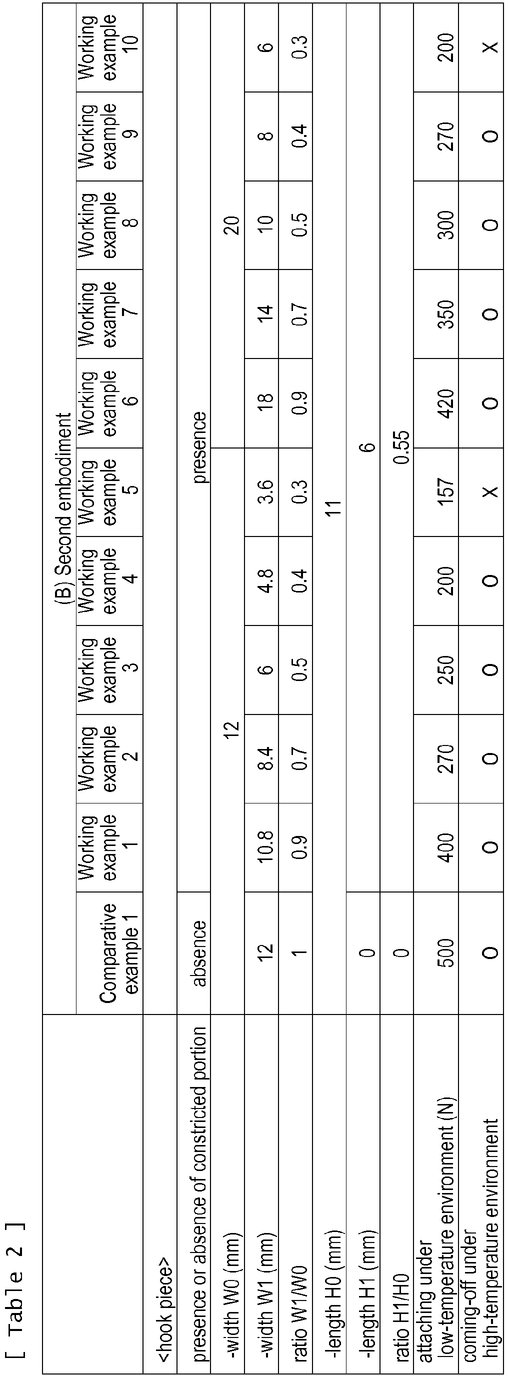

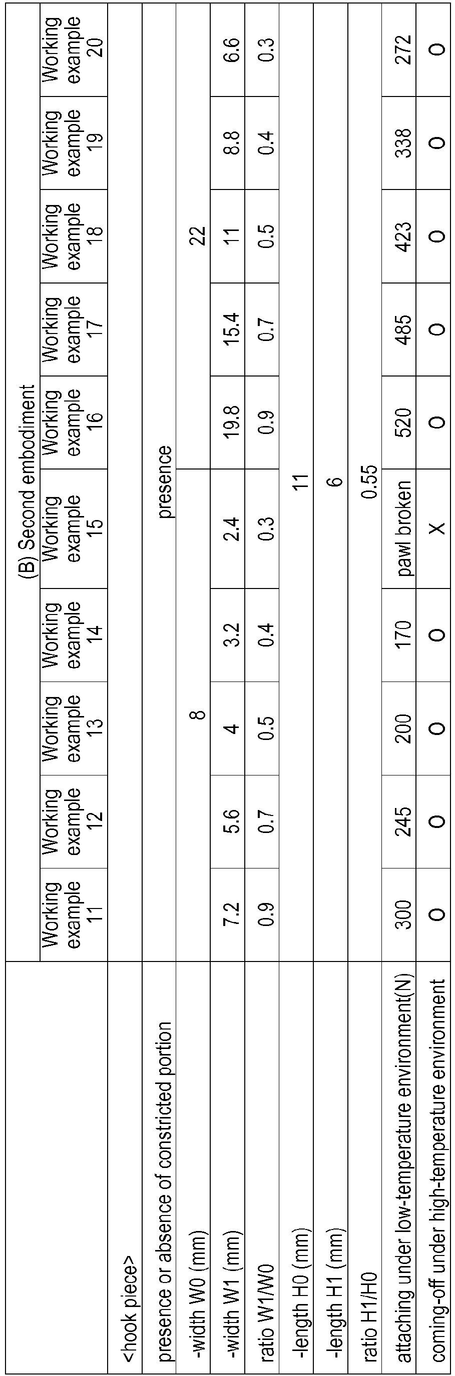

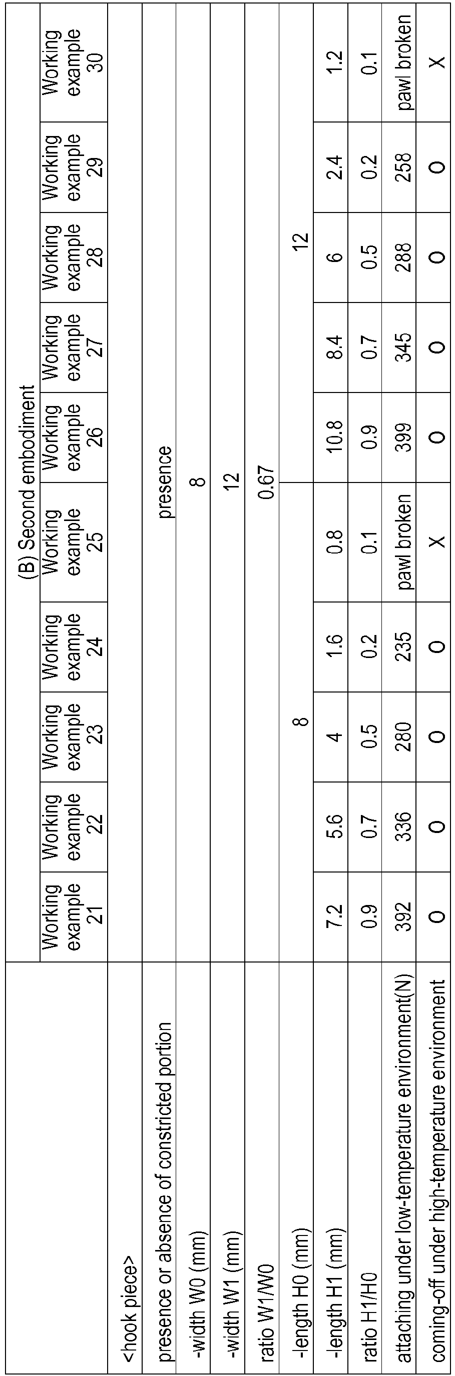

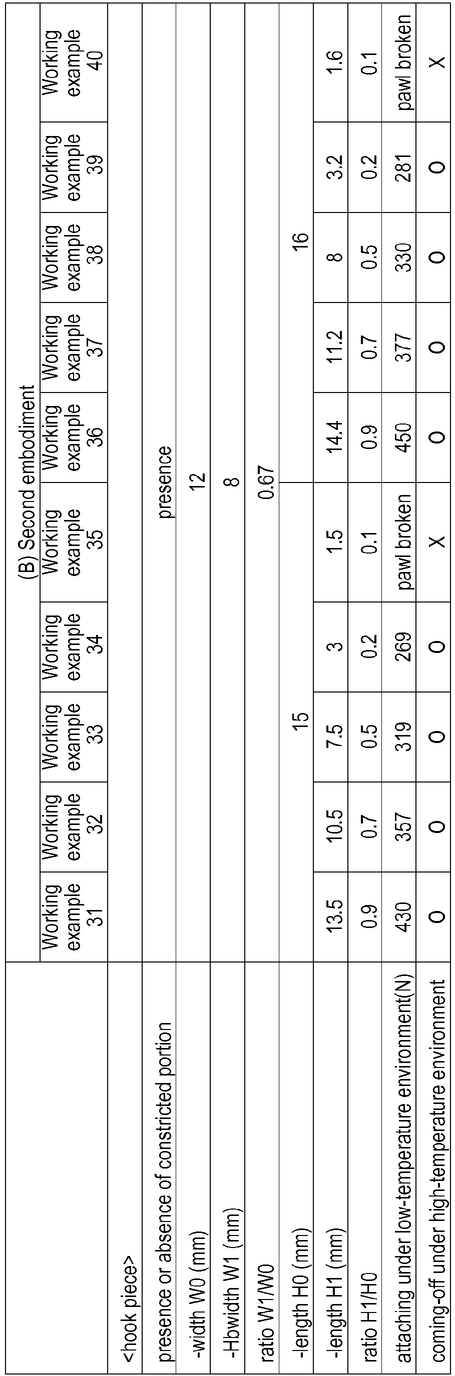

As shown in Table 2, it can be confirmed that, in the working Examples, performance requirements under high temperature environments and low temperature environments could be achieved at high levels, while increasing the degree of design freedom.

### (C) Guide means:

Puncture repair kits having guide means whose specifications are shown in Table 3 were experimentally manufactured and tested for the erroneous insertion preventing effect and protective effect against fall.

The specifications were substantially the same excepting those listed in Table 3.

### (3) The erroneous insertion preventing effect:

The compressor and the bottle unit were left in a constant temperature bath under a low-temperature environment (-40 degrees C) and a high-temperature environment (60 degrees C) for 24 hours for each. For each of the cases, being left under the high-temperature environment and being left under the low-temperature environment, an attempt to forcibly attach the bottle unit to the compressor inversely of the attaching direction was made to confirm whether the bottle unit could be attached or not.

Evaluations are as follows.
X: it could be inserted,
Δ: sometimes it could be inserted,
○: it could not be inserted.

### (2) The protective effect against fall:

The bottle unit was left in a constant temperature bath under a low-temperature environment (-40 degrees C) and a high-temperature environment (60 degrees C) for 24 hours for each. For each of the cases, being left under the high-temperature environment and being left under the low-temperature environment, the bottle unit was dropped from a height of 1 meter with the connection nozzle being downward to confirm whether the connection nozzle and the hook pieces were broken or not. The amount of the puncture repair liquid in the bottle unit was 410 ml.

Evaluations are as follows.
X: at least either the connection nozzle or the hook pieces was damaged.
○: both the connection nozzle and the hook pieces were not damaged.

**[Table 3]**

| | Guide means | | | | | |
|---|---|---|---|---|---|---|
| | Comparative example 1 | Comparative example 2 | Working example 1 | Working example 2 | Working example 3 | Working example 4 |
| guide plate width WA (mm) | 12 | | | | | |
| guide plate width WB (mm) | 12 | 12 | 14 | 15 | 18 | 21 |
| WA-WB (mm) | 0 | 0 | 2 | 3 | 6 | 9 |
| guide plate height Ha (mm) | 18 | | | | | |
| connection nozzle height Hb (mm) | 16 | 17 | 16 | 16 | 16 | 16 |
| hook piece height Hc(mm) | 15 | 15 | 15 | 15 | 15 | 15 |
| difference(Ha-Hmax) (mm) | 2 | 1 | 2 | 2 | 2 | 2 |
| erroneous insertion preventing effect | | | | | | |
| -high-temperature environment(60degrees C) | X | X | Δ | ○ | ○ | ○ |
| -low-temperature environment(-40degrees C) | X | X | Δ | ○ | ○ | ○ |
| protective effect against fall | | | | | | |
| -high-temperature environment(60degrees C) | ○ | X | ○ | ○ | ○ | ○ |
| -low-temperature environment(-40degrees C) | ○ | X | ○ | ○ | ○ | ○ |

As shown in Table 3, it can be confirmed that working Examples can exert the erroneous insertion-preventing effect and the protective effect against fall.

The puncture repair kit having the indicating means shown in Figure 13 was experimentally manufactured, and the completion of the coupling by the connecting means was confirmed.
In the conventional product without the connecting means, it was confirmed that the completion of the connecting can not be surely determined under high temperature environments (60 degrees C.) since it depended only on the click feeling (response) at the time of connecting.
On the other hand, in the case of the product provided with the indicating means having the projecting indicator portion and the notched portion, the completion of the cooping was visually recognized as the completion of the insertion.
In particular, in the case of the example which is intended to indicate the insertion depth by the positions of the rear edges of the projecting indicator portion and the notched recess as shown in Figure 12, it could be confirmed that the completion of the insertion is more clearly recognizable.
Further, when the color of the projecting indicator portion was different from the color of the peripheral part of the notched recess, the completion of the insertion was more clearly recognizable.

### Description of the reference signs

- 1: puncture repair kit
- 2: compressed air discharge port portion
- 3: compressor
- 4: bottle container
- 4A: opening
- 5: extraction cap
- 6: bottle unit
- 7: connecting means
- 7A: first connecting portion
- 7B: second connecting portion
- 8: first flow path
- 9: second flow path
- 10: intake port portion
- 11: outlet portion
- 24: hook piece
- 25: connection nozzle
- 27: plate-shaped base portion
- 27A: inclined portion
- 28: hook claw part
- 28S: locking surface
- 29S: engaging surface
- 40: plate-shaped portion
- 40A: constant width portion
- 40B: constricted portion
- 50: guide means
- 51A: first guide plate portion
- 51B: second guide plate portion
- 52A: first guide socket
- 52B: second guide socket
- 53: insertion hole
- 60: indicating means
- 61: projecting indicator portion
- 61e: rear edge in the coupling direction
- 62: notched recess
- 62e: rear edge in the coupling direction

## Claims

1. A puncture repair kit comprising
a compressor having a compressed air discharge port portion for discharging compressed air,
a bottle unit in which an extraction cap is attached to a mouth of a bottle container containing a puncture repair liquid, and
a connecting means capable of connecting and fixing the compressor and the extraction cap of the bottle unit each to other,
**characterized in that**
the extraction cap has
an intake port portion capable of being directly coupled with the compressed air discharge port portion in a coupling direction and taking the compressed air from the compressed air discharge port portion into the bottle container through a first flow path, and
an outlet portion for taking out the puncture repair liquid and the compressed air in succession from the bottle container through a second flow path by the intake of the compressed air,
the connecting means is composed of
a first connecting portion formed on the extraction cap side and a second connecting portion formed on the compressor side,
the first connecting portion has
a pair of plate-shaped base portions extending in the coupling direction from the extraction cap through on both sides of the intake port portion, and
a hook claw portion of a triangular cross section provided at a tip end portion of each of the plate-shaped base portions and comprising a locking surface projecting outwardly from the outer surface of the plate-shaped base portion,
the second connecting portion has
an engaging surface for fixing the compressor and the extraction cap in the state of the direct coupling by engaging with the locking surface, and
(1) in a cross section perpendicular to the plate-shaped base portion, an angle θ1 of the locking surface with respect to a reference line oriented in the front in the coupling direction, is different from an angle θ2 of the engaging surface with respect to the reference line, or
(2) a plate-shaped portion which is a region from the rear end in the coupling direction, of the plate-shaped base portion to the hook claw portion has
a constant width portion whose width is constant, and
a constricted portion whose width is less than that of the constant width portion.

2. The puncture repair kit as set forth in claim 1, **characterized in that**, in a cross section perpendicular to the plate-shaped base portion, the angle θ1 of the locking surface with respect to a reference line oriented in the front in the coupling direction is different from the angle θ2 of the engaging surface with respect to the reference line, and
the angle θ1 is smaller than the angle θ2.

3. The puncture repair kit as set forth in claim 2, **characterized in that** the angle θ1 is 90 to 150 degrees.

4. The puncture repair kit as set forth in claim 2 or 3, **characterized in that** the plate-shaped base portion is provided in a tip region including a region in which at least the hook claw part is formed
with an inclined portion in which the plate-shaped base portion is inclined toward the hook claw part.

5. The puncture repair kit as set forth in claim 4, **characterized in that**, in a cross section perpendicular to the plate-shaped base portion, the angle α of the inclined portion with respect to the reference line is not more than 5 degrees.

6. The puncture repair kit as set forth in claim 1, **characterized in that** the plate-shaped portion which is the region from the rear end in the coupling direction of the plate-shaped base to the hook claw portion has
the constant width portion whose width is constant, and
the constricted portion whose width is less than that of the constant width portion, and
the minimum width w1 of the constricted portion is not less than 0.4 times the width w0 of the constant width portion.

7. The puncture repair kit as set forth in claim 6, **characterized in that** a length H1 of the constricted portion is not less than 0.2 times a length H0 of the plate-shaped portion.

8. The puncture repair kit as set forth in claim 1, **characterized by** having a guide means for restricting the direction of the extraction cap at the time of the direct coupling,
the guide means is composed of
first and second guide plate portions which are extend in the coupling direction from the extraction cap through on both sides of the intake port portion, and
first and second guide sockets, which is provided on the compressor, and into which the first and second guide plate portions are respectively inserted, and
in the guide means, the first and second guide plate portions are different from each other with respect to their formation positions and/or shapes so that an erroneous insertion can be prevented and thereby the direction of the extraction cap is restricted.

9. The puncture repair kit as set forth in claim 8, **characterized in that** the difference between the widths of the first and second guide plate portions of the guide means is not less than 3 mm.

10. The puncture repair kit as set forth in claim 8 or 9, **characterized in that** the intake port portion is composed of a connection nozzle extending in the coupling direction from the extraction cap,
the projecting lengths Ha of the first and second guide plate portions from the extraction cap are larger than the protruding length Hb of the connection nozzle from the extraction cap and
the protruding length Hc of the first connecting portion from the extraction cap.

11. The puncture repair kit as set forth in claim 10, **characterized in that** the difference (Ha-Hmax) between the protruding length Ha and the protruding length Hmax which is the larger one of the protruding lengths Hb and Hc, is 2 to 20 mm.

12. The puncture repair kit as set forth in claim 10 or 11, **characterized in that** the plate-shaped base portion of the first connecting portion is disposed
between the connection nozzle and the first guide plate portion, and
between the connection nozzle and the second guide plate portion,
the first and second guide plate portions have an insertion hole through which a release bar passes to release the connection by the connecting means by pushing the hook claw parts inwardly.

13. The puncture repair kit as set forth in claim 1, **characterized by** having an indicating means for indicating the completion of the connecting by the connecting means.

14. The puncture repair kit as set forth in claim 13, **characterized in that** the indicating means has a projecting indicator portion protruding from the outer surface of the extraction cap.

15. The puncture repair kit as set forth in claim 14, **characterized in that** the indicating means is provided
in the outer surface of the compressor
with a notched recess into which the projecting indicator portion is inserted accompanying the direct coupling.

16. The puncture repair kit as set forth in claim 15, **characterized in that** the outer shape of the projecting indicator portion as viewed from the outer side is a triangular or trapezoidal shape whose width is decreased forward in the connecting direction.

17. The puncture repair kit as set forth in claim 15 or 16, **characterized in that** the projecting indicator portion indicates the completion of the connecting by the insertion of the rear edge in the coupling direction of the projecting indicator portion
up to an insertion depth beyond the rear edge in the coupling direction of the notched recess.

18. The puncture repair kit as set forth in claim 16 or 17, **characterized in that** the color of the projecting indicator portion is different from that of a peripheral part of the notched recess.
